# EUROPEAN PATENT APPLICATION

(11) **EP 4 509 006 A1**
(43) Date of publication of application: **19.02.2025**
(21) Application number: 24193478.5
(22) Date of filing: 08.08.2024
(51) Int. Cl.: A43B 13/04, B29D 35/12, B33Y 10/00, B33Y 70/00, B33Y 80/00

(54) **LIQUID POLYMER APPLICATION TO SPORTING GOODS PRODUCTS**

(30) Priority: 16.08.2023 DE 102023207871
(71) Applicant: adidas AG, 91074 Herzogenaurach (DE)
(72) Inventor: KORMANN, Marco Florian, 91074 Herzogenaurach (DE); DYCKMANS, Christoph, 91074 Herzogenaurach (DE); LE, Tru, 91074 Herzogenaurach (DE); O'MAHONY, David, 91074 Herzogenaurach (DE); HENWOOD, Thomas, 91074 Herzogenaurach (DE); LIN, Yu-Chia, 91074 Herzogenaurach (DE); LEE, Tsung-Han, 91074 Herzogenaurach (DE); KE, Chien-An, 91074 Herzogenaurach (DE); CHEN, Li-Wei, 91074 Herzogenaurach (DE)
(74) Representative: Bardehle Pagenberg Partnerschaft mbB Patentanwälte Rechtsanwälte

(57) **Abstract**

The present invention relates to a method (100) for producing a component (240), preferably for a sporting good (260), comprising the following steps: (a.) providing (110) a polymer (210); (b.) providing (120) a solvent (220); (c.) mixing (130) the polymer (210) with the solvent (220), thereby producing a liquified polymer (230); and (d.) curing (170) the liquified polymer (230), thereby producing the component (240). Other aspects of the invention relate to an outsole and a sports shoe obtained by the method according to the invention.

## Description

### 1. Technical field

The present invention relates to a method for producing a component, preferably for a sporting good, an outsole manufactured with such a method as well as a method for producing a sports shoe with such an outsole and the sports shoe.

### 2. Prior art

Manufacturing sporting goods, such sports shoes, includes multiple steps and processes. Different production processes are known in the art. For example, in case of a sports shoe, the first step is designing the outsole, which includes determining its shape, dimensions, tread pattern, and other features. This includes the choice of materials used in the production. Nowadays, outsoles are typically made from various types of rubber or synthetic compounds. The material choice depends on factors such as the desired level of traction, durability, flexibility, weight and specific performance requirements.

Outsoles, but other sporting goods as well, are usually prepared using injection molding. For this purpose, the material for molding is produced by mixing the selected rubber or synthetic compound with fillers, plasticizers, stabilizers and coloring agents known in the art. The prepared material is then injected into the mold cavity using an injection molding machine. After the mold is cooled in order to solidify the material, the sole is further treated for example by cutting edges. In a further process step, the produced outsole is then integrated into the shoe manufacturing process by attaching it to the shoe midsole, upper or other elements using adhesives, stitching or other assembly techniques.

Several prior art documents, such as WO 2005 090 062 A1, CN 216 416 187 U and WO 2019 106 837 A1 relate to sporting goods, such as outsoles for shoes that are manufactured using injection molding.

A different approach in this context is described in the prior art, in particular by the prior art documents IT1402354, CN109228445 and US11278081. IT1402354 describes method for reinforcing and waterproofing a shoe, as well as a shoe comprising a coating. CN109228445 discloses a dipping glue type shoe sole processing method. US11278081 describes a sole for an article of footwear including a continuous dispensed component forming a first layer and a second layer. Further prior art is known from WO 2016 / 077 221 A1 which concerns the production of constructs of footwear and components thereof by jet extrusion.

However, a common disadvantage of these soles is that the final sole has a specific weight and thickness in order to provide for the required durability and performance of the shoe, that significantly impacts the total shoe weight. Another common disadvantage of the soles is that they are not sustainable as the shoe is designed to be disposed after usage. In addition, it is not easily possible to change the material properties during the manufacturing process for adapting the sole to the diverse requirements of the sporting good. Also, soles are usually produced in several independent steps, which result in an overall labor intensive and inefficient process.

Therefore, the underlying problem of the present invention is to provide improved methods and sporting goods in order to at least partly overcome the above-mentioned deficiencies of the prior art.

### 3. Summary of the invention

The above-mentioned problem is at least partly solved by a method for producing a component, preferably for a sporting good, comprising the following steps: a.) providing a polymer; b.) providing a solvent; c.) mixing the polymer with the solvent, thereby producing a liquified polymer; and d.) curing the liquified polymer, thereby producing the component.

Whereas in the prior art mentioned above, producing a component, for example an outsole for a sporting good usually is carried out by e.g. injection molding a first component to a second component, such a process is not flexibly adaptable to the special needs of the product. The present invention is based on a different approach, namely, the production of a liquified polymer by mixing the polymer and the solvent and which is applied and cured on the sporting good. In this manner, the liquified polymer can be applied more precisely and effectively on the sporting good, as no material waste is produced e.g. by cutting excess material. In this manner, the method according to present invention provides an improved method for producing a component of e.g., a sporting good, by only consuming as much material as needed and avoiding any waste production.

Furthermore, no manual assembly is required as well as a glue-less application is possible, providing for an efficient process with reduced material consumption and consequently reduced overall costs, that is applicable to automated processes. Gluing may require complex pretreatment of the components and additionally adhesives used for the gluing of plastic components are often harmful or environmentally hazardous.

Following this approach, the component can be provided and cured more than once which allows for the strategic production of components having different thickness and weight while significantly improving the performance and durability of the sporting good and maintaining or even increasing the cushioning properties of the same. In this manner, the method allows for a mold-less production method, while being able of flexibly addressing different needs and requirements of the product. Therefore, the claimed invention significantly simplifies the overall process for producing components, preferably for a sporting good as well as enhances overall sustainability of the process as renewing of worn products, i.e. recoating and re-application of the component is possible. This significantly helps to extend the lifetime of the sporting goods by renewing the respective component. Finally, this further helps to reduce overall waste production by the consumer. By choosing sustainable starting materials (polymer, solvent) in the method, the produced component and sporting good is recyclable and produced in a sustainable manner. Moreover, the inventors have found that the component may provide a shiny and/or glossy appearance which regarded as advantageous from a visual perspective.

Therefore, the whole manufacturing process of the sporting good using the method according to present invention may be more efficient and sustainable. The method according to the invention provides the possibility that the curing process provided to different portions of the sporting good may be adjusted easily so that the component is cured on the sporting good without wasting an excessive amount of energy and time. Moreover, the method of the present disclosure allows for the possibility of creating patterns and designs by the use of the component that may vary in their design and shape. For example, the component can be transparent, non-transparent, uni- or multicolored as well as individualized by the consumer.

A *"component"* according to present disclosure is but not limited to, a unit or module that performs a specific function within a larger system. A component is for example, a component used in the manufacturing process of a sporting good, such as a sole unit, a midsole, an outsole, an outsole element, a film or foil material, a sole plate, a shoe upper, a functional element.

A *"sporting good"* according to present disclosure is to be understood but not limited to, as any equipment, gear or product designed and/or used specifically for sports. Sporting goods are e.g., sports clothing, sports shoes, sports accessories, and/or sports equipment.

A *"polymer"* according to present disclosure is but not limited to, a large molecule based on repeating subunits (monomers), which are bound together and form a network structure. Polymers may be classified as the following: Synthetic polymers, natural polymers, biodegradable polymers, composite polymers.

A *"solvent"* according to present disclosure is but not limited to, a compound capable of dissolving, dispersing, or extracting other compounds. Solvents may be polar or nonpolar. Common solvents are in liquid form but may be also a gas or a solid.

"Mixing" according to present disclosure is to be understood but not limited to, as a process of combining to or more substances resulting in a mixture of the individual substances.

*"Curing"* according to present disclosure is to be understood but not limited to, as a the chemical and/or physical process of a substance which typically promotes hardening, setting and/or solidification of the same. Curing is based on chemical reactions, heat influences and/or other external or internal factors.

In some embodiments, the method may further comprise a depositing step of the liquified polymer obtained in the mixing step, which may be a first component of the sporting good, onto a second component of a sporting good. The depositing step may precede the curing step. *"Depositing"* or *"deposition"* according to present disclosure is to be understood but not limited to, as a process of applying one or more elements to other one or more elements. Such embodiments may significantly simplify the process of producing the component. For example, the liquified polymer can be deposited with different physical characteristics before curing the polymer on the sporting good, enhancing the efficiency of the manufacturing process. Moreover, these method steps may be performed in one device or may be performed at different entities to provide a high degree of flexibility and automation in the production process.

The method may further comprise the step of texturing the liquified polymer obtained in the mixing step, and which may precede the curing step. *"Texturing"* or *"structuring"* according to present disclosure is to be understood but not limited to, as a process of manipulating physical properties of an element by external influence, e.g. shape, pattern and/or surface. The inventors have found that the addition of textures and structures can significantly improve the performance and durability of the sporting good, as the thickness of the applied layer can be adapted to product requirements, such as weight, abrasion resistance and design. The texturing may be performed using common texturing devices, e.g. pattern brushes and/or pattern roller. The choice of the texturing device depends on the desired pattern and/or the physical characteristic of the liquified polymer.

In some embodiments, the sporting good may be a sports shoe. A sports shoe is, for example, a football shoe, basketball shoe, running shoe, tennis shoe, motorsport shoe, hiking shoe and so forth. The inventors have found that the inventive method when applied to a sports shoe significantly improves its lifetime and durability as well as reduces the overall weight of the sports shoe.

The component may be the sole, preferably the outsole of the sports shoe. In this manner, the sole is manufactured by the method of present disclosure and allows for equal or even and more durable properties by using one or more lighter and thinner soles and/or outsoles as compared to usual soles known in the art.

In some embodiments, the sport shoe may be a football shoe. In this manner, the football shoe shows enhanced physical properties compared to football shoes known in the art. Specifically, the inventors have found that following this approach, the football shoe is lighter while maintaining the same and even better performance characteristics than usual football shoes.

In some embodiments, the component may be a stud of the sports shoe. Besides the advantage of being lighter while maintaining the same and even better performance characteristics than usual sports shoes with studs, it allows for the possibility of individually recoating and/or renewing each stud. Depending on the diverse needs of the product and/or the consumer, the studs may be formed and textured individually. In this manner, it is possible to design strategically and conceptually each sports shoe comprising studs, thereby providing for an improved method.

In some embodiments, the liquified component may be deposited onto one or more sections of the sports shoe. The sections may include a toe section, a forefoot section, a heel section, a midsole section, a sidewall section, and/or an upper section. The *"liquified component"* is to be understood but not limited to, as the component having semi-solid physical properties and/or the liquified polymer according to the present invention. In this manner, the sports shoe may have individual sole elements, that can be adapted and re-applied. The liquified component may be deposited on predetermined portions of the sporting good. For example, the liquified component may comprise different physical properties on each of the predetermined portions. In this manner, the sporting good may be conceptually adapted while allowing for a lighter total weight of the sporting good as well as enhancing its durability and performance characteristics.

The one or more predetermined portions of the sporting good may be determined using a torsion map, an abrasion map and/or a pressure map. The inventors have found that using this approach, the component can be applied in defined areas where it is most required. These predetermined areas or defined areas can for example be described as "the highest general wear zones". The deposition application is adapted to each map by adapting the physical properties and in particular the thickness of the liquified polymer and/or component based on the zones deriving from the maps. These zones are characterized e.g. in that high pressure, traction and/or abrasion takes place. The liquified polymer can be applied with different thickness and weight onto the predetermined areas in order to fulfill the abrasion and traction requirements. Furthermore, in this manner, weight reduction, performance, lifetime, and/or durability of the sporting good is enhanced.

In some embodiments, the liquified component may be deposited onto the second component in a pattern. The advantage of this method is an individualized and adapted application of the liquified component, that requires less material and thus is cost-effective. Moreover, the liquified component may provide a shiny and/or glossy appearance. The pattern may comprise a laminar and/or linear pattern. In this manner, the method can be applied for both linear forms and designs as well as for large uniform laminar designs. This has the advantage of creating islands with more or less liquified components which are adapted to the individual requirements of the product and/or consumer.

The first component may be deposited onto the second component with a thickness of 1-10 mm, preferably 2 mm-4 mm, most preferably 3 mm. The inventors have found that when applying the component with the specific thickness enhances the performance of the sporting good as well as achieves the same or even enhanced results for its durability properties when compared to commercial components.

The thickness of the first component after the curing step may be 0.3 mm-0.7 mm, preferably 0.5 mm. The specific thickness of the component has the benefit that the component is showing the same or even better performance and/or durability properties while having a reduced weight and thickness.

In some embodiments, the depositing step may be carried out by at least one of the following methods: brushing, coating, dipping, painting, automated dispensing, automated printing, controlled dispensing. The inventors have found that these specific deposition processes represent the best mode for deposition of the liquified polymer. The choice of the deposition process is dependent on the characteristics of the liquified polymer and the second component of the sporting good.

In some embodiments, the second component may be produced via 3D printing, wherein preferably the second component may be a midsole and/or a shoe upper and/or parts thereof. The liquified polymer may be subsequently applied onto the second component wherein the liquified polymer may be preferably an outsole. 3D printing comprises additive manufacturing methods, such as stereolithographic methods and laser sintering. With stereolithographic methods light causes chemical monomers and oligomers to cross-link together to form layer-wise polymers making up the 3D printed object. With laser sintering a laser causes powdered material to sinter due to heat. Aiming the laser at points in space defined by a 3D model, binding the material together creates a solid structure. Another example of an additive manufacturing method is fused deposition modeling is which the part is produced by extruding small beads or streams of material which harden immediately to form layers. If both the midsole and the upper are manufactured using a 3D printing process, the midsole and the upper may be manufactured in separate 3D printing processes and connected afterwards, e.g. by gluing, welding sewing, etc. Alternatively, the mid-sole and the upper may be manufactured together in a single manufacturing step.

In another embodiment, the second component is a midsole made from a polymer material and the liquified polymer is applied onto the midsole, thus forming an outsole. In this embodiment, the polymer material may be an Ethylene-vinyl acetate (EVA), a thermoplastic urethane (TPU) or a supercritical foam. Those materials provide good cushioning properties while being relatively lightweight.

In some embodiments, the liquified polymer may be deposited in a first section of the sporting good with a dynamic viscosity of 30,000 to 50,000 mPa·s; and in a second section of the sporting good with a dynamic viscosity of 10,000 to 30,000 mPa·s. Different viscosities may be obtained by varying the mixing ratio of the solvent and the polymer. In this manner, it is possible to deposit different viscous materials on the second component by using one operation step. The method allows for flexible adaptation of the operation step based on the needs of the product.

The first section may be an outer rim of the second section of the sporting good. This feature allows for quick and easy deposition onto the second component using only one operation step, for the deposition of one pattern onto the sporting good.

In some embodiments, the contact angle θ between the liquified polymer and the second component is 30° to 110°, preferably 40° to 90°, more preferably 50° to 70°. The inventors have found that these wettability characteristics represent the best mode for deposition of the liquified polymer onto the second component.

The curing step may be carried out using radiation. In this way, the liquified component which is deposited on the second component is cured on the second component while at the same time removing the solvent and drying the deposited liquified component.

In some embodiments, the polymer may be selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof. The inventors have found that the use of these polymer allows for a time efficient and sustainable process in the production of the component. Suitable polymer materials may be elastic foam materials, such as thermoplastic elastomers and/or elastomers. Preferred materials used in present disclosure are thermoplastic elastomers. More preferred materials used in present disclosure are urethane-based thermoplastic elastomers (TPU), polyester-based thermoplastic elastomers (TPE) and/or polyamide-based thermoplastic elastomers (TPA).

In some embodiments, the solvent is a mixture selected from the group of solvent-borne and/or water-borne solvents, preferably from the group of solvent-borne solvents, more preferably from the group of (C₁-C₆) ethers, (C₁-C₁₀) esters, (Ci-Cs) ketones, (Ci-Cs) alkanes, and/or combinations thereof. These solvents have shown the best compatibility with the production method of the component, while allowing for flexible adaptation of physical characteristics of the polymer to the requirements of the product and the process.

The solvent may be a mixture of one or more of tetrahydrofuran (THF), methyl ethyl ketone (MEK), cyclohexane (CYC), ethyl acetate, butyl acetate, preferably THF and/or CYC. These solvents have the advantage that they can be removed in a time efficient manner during the curing process and allow for a production process that is capable of adapting to various physical properties of the liquid polymer.

The ratio of the mixture may be in the range of 10 to 90 vol%., preferably 20 to 80 vol. %, more preferably 30 to 70 vol. %. In some embodiments, the ratio of the mixture may be in the range of 10 to 90 wt.%., preferably 20 to 80 wt. %, more preferably 30 to 70 wt. %. The inventors have found that the ratio of the mixture of the solvent shows the best compatibility for both mixing the polymer and changing/adapting the physical characteristics of the liquified polymer to the special requirements of the product and the process.

In some embodiments, the liquified component may comprise a dynamic viscosity of 10,000 to 50,000 mPa·s, preferably of 20,000 to 40,000 mPa·s. The use of the liquid polymer comprising the specific dynamic viscosity allows for its use in automated and/or manual deposition processes.

The polymer may be characterized by a Shore A value and/or Shore D value, wherein the Shore A value is in the range of 20 to 120, preferably, 40 to 100, more preferably, 60 to 80; and the Shore D value is in the range of 2 to 80, preferably 5 to 75, more preferably 8 to 70. The use of a polymer comprising these Shore A and/or Shore D values provide for the durable properties of the final component. Suitable polymer materials are elastic foam materials, such as thermoplastic elastomers (TPE) and/or elastomers.

The ratio of the polymer to the solvent in the mixing step may be in the range of 2:98 to 40:60 vol.%, preferably, 5:95 to 30:70 vol.%, more preferably, 10:90 to 20:80 vol.%. The inventors have found that the specific ratio of solvent to the polymer allows for convenient use in the deposition process and flexible adaptation to the requirements of the product and/or process.

In some embodiments, the liquified polymer may further comprise pigments and/or fibers. This allows for an increased stiffness and durability in the selected areas of application. *"Fibers"* are to be understood but not limited to, threads or filaments based on natural and/or synthetic materials.

The liquified polymer may further comprise granulates. In this manner, the traction and grip properties are enhanced in selected areas of the sporting good based on the use of the granulates. *"Granulates"* are to be understood but not limited to, as particles with different size and shape which may have specific physical properties based on natural and/or synthetic materials.

In some embodiments, the curing step may have a curing temperature of between 20°C to 150°C, preferably 30°C to 100°C, more preferably 40°C to 50°C is used, and the curing time of between 2 min to 750 min, preferably, 5 min to 390 min, more preferably 10 min to 30 min. The inventors have found that these curing conditions allow for the cost- and energy-efficient process for the production of the component.

In further aspect, the present invention relates to a method for manufacturing a sports shoe, comprising the method of present disclosure, wherein the first component is an outsole of the sports shoe, and the second component is a midsole of the sports shoe. The advantages of the method for manufacturing a sports shoe are avoiding e.g. glue- and injection molding-based deposition of the outsole to the mid-sole of the sports shoe.

In another aspect, the present invention relates to an outsole manufactured according to the method of present disclosure. The inventors have found that the component can be specifically used to create a lighter and thinner outsole while still allowing for the same and/or even enhanced performance and durability of the same. The outsole may have a pattern. In this manner, the outsole can be individually designed based on the needs and requirements of the product and/or consumer.

In a further aspect, the present invention relates to a sports shoe comprising an outsole according to the present disclosure. The inventors have found that the sports shoe comprising the outsole according to present disclosure is lighter, and thinner, making the overall sports shoe more desirable. In addition, the sports shoe exhibits the same and/or even enhanced durability and performance properties than sports shoes known in the art.

The outsole may be arranged at least in a toe section, a mid-foot section, and or a heel section of the sports shoe. This has the benefit that the outsole can be placed in specific portions of the sports shoe, allowing for weight reduction and material- and cost-saving.

In another aspect, the present invention relates to a sports shoe comprising a first component and a second component, wherein the first component is manufactured according to a method of the present disclosure, wherein the first component is arranged on an upper of the sports shoe. The inventors have found that the sports shoe comprising the component according to the present disclosure is lighter, and thinner, making the overall sports shoe more desirable while showing the same and/or even enhanced durability and performance properties than sports shoes known in the art.

### 4. Short description of the figures

Possible embodiments of the present invention are further described in the following detailed description with reference to the following figures:
- **Fig. 1:**: presents a flow diagram illustrating an exemplary method for producing a component, preferably for a sporting good.
- **Fig. 2:**: illustrates an exemplary sports shoe comprising the component according to the present invention.
- **Figs. 3 and 4:**: present two exemplary embodiments of the component, in particular as a sole.
- **Figs. 5 and 6:**: present exemplary embodiments of the component, in particular as studs.
- **Fig. 7:**: presents an exemplary embodiment of a sports shoe according to the invention.
- **Figs. 8 - 11:**: present illustrative and exemplary zones for deposition of the liquified polymer.

### 5. Detailed description of preferred embodiments

Possible embodiments and variations of the present invention are described in the following with particular reference to a sporting good, in particular a sports shoe. However, the concept of the present invention is not limited to these embodiments. The method described herein may identically or similarly be applied to the manufacture of any sporting goods in general, such as, for example, sports clothing or sports equipment.

It is also to be noted that individual embodiments of the invention are described in greater detail below. However, it is clear to the person skilled in the art that the constructional possibilities and optional features described in relation to these specific embodiments can be further modified and combined with one another in a different manner within the scope of the present invention and that individual steps or features can also be omitted where they appear to be unnecessary to the skilled person. In order to avoid redundancies, reference is made to the explanations in the previous sections, which also apply to the embodiments of the following detailed description.

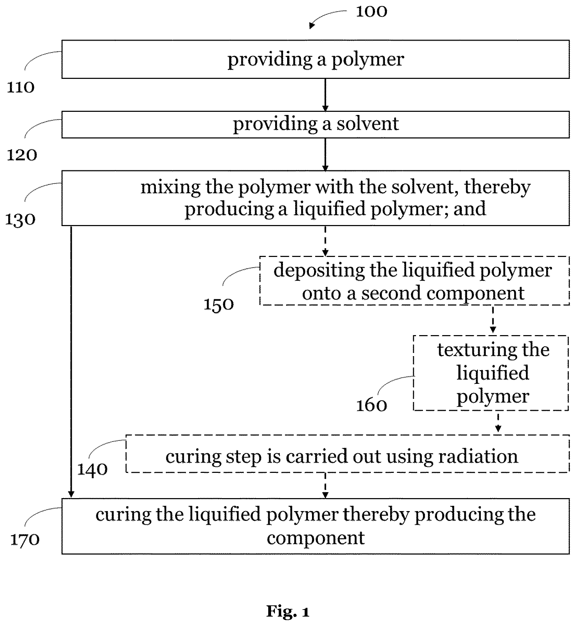

Fig **1****.** presents a flow diagram illustrating exemplary method steps for a method 100 for producing a component 240 according to the invention, preferably for a sporting good 260. The method 100 begins with the method step 110 with providing a polymer. The polymer is selected from the group of elastomers and/or thermoplastic elastomers. Preferred materials from the group of elastomers are block foams, such as ethylene-vinyl-acetate (EVA), polyurethanes (PU) and/or rubber. Thermoplastic elastomers (TPE) are bead-, block foams, crosslinked, and/or uncrosslinked and are classified using the following groups: TPE-O or TPO; TPE-V or TPV; TPE-U or TPU; TPE-E or TPE or TPC; TPE-S or TPS; TPE-A or TPA. Polymer materials from the group of TPE-O or TPO are polypropylene (PP), ethylene propylene diene rubber or ethylene propylene diene monomer rubber (EPDM). Preferred polymer materials from the group of TPE-V or TPV are thermoplastic vulcanizates such as Sarlink^{®}. Polymer materials from the group of TPE-U or TPU are further classified in ester based, ether based, or linear UP materials. For instance, a preferred ester-based TPU material is e.g. Huntsman-H Foam^{®}. For example, a preferred ether-based TPU material is e.g Elastollan^{®} 11XX (BASF). Preferred polymer materials from the group of TPE-E or TPC are e.g. Hytrel^{®} (DuPont), Keyflex^{®} (LG) and/or Arnitel^{®} (DSM). A preferred polymer material from the group of TPE-S or TPS is, for example, Styroflex^{®} (BASF). Preferred polymer materials from the group of TPE-A or TPA are from the group of polyether block amides, such as PEBAX^{®}, and/or Vestamid^{®}. The polymer in the method step 110 is characterized in that it comprises a Shore A and/or D value. The Shore A value is in the range of 20 to 120, preferably, 40 to 100, more preferably, 60 to 80; and the Shore D value is in the range of 2 to 80, preferably 5 to 75, more preferably 8 to 70.

The second step in the method 100 is the method step 120 with providing a solvent. Suitable solvents are solvents selected from the group of solvent-borne and/or water-borne solvents, preferably from the group of solvent-borne solvents, more preferably from the group of (C₁-C₆) ethers, (C₁-C₁₀) esters, (Ci-Cs) ketones, (Ci-Cs) alkanes, and/or combinations thereof. The solvent is preferably a mixture of one or more of tetrahydrofuran (THF), methyl ethyl ketone (MEK), cyclohexane (CYC), ethyl acetate, butyl acetate, preferably THF and/or CYC. The ratio of the mixture of the solvent is in the range of 10 to 90 vol%., preferably 20 to 80 vol. %, more preferably 30 to 70 vol. %.

In the third method step 130 of the method 100, the polymer and the solvent are mixed, thereby producing a liquified polymer 230. The ratio of the polymer to the solvent in the mixing step is in in the range of 2:98 to 40:60 vol.%, preferably, 5:95 to 30:70 vol.%, more preferably, 10:90 to 20:80 vol.%. The ratio of the polymer to the solvent in the mixing step is in in the range of 10 to 90 wt.%., preferably 20 to 80 wt. %, more preferably 30 to 70 wt. %.

As shown in **Fig. 1****,** the method 100 can comprise the optional method steps 150 and 160. These steps precede the curing step 170. In method step 150, the liquified polymer 230 is deposited onto a second component 250. The liquified component 230 is deposited onto the second component 250 with a thickness of 1-10 mm, preferably 2 mm-4 mm, most preferably 3 mm. Furthermore, the liquified component 230 is deposited onto one or more sections of the sports shoe. These sections include a toe section, a forefoot section, a heel section, a midsole section, a sidewall section, and/or an upper section. In particular, the liquified component 230 is deposited in predetermined portions which is determined using a torsion map, an abrasion map and/or a pressure map as will be described in more detail below. The liquified polymer is deposited in the depositing step 150, which is carried out by at least one of the following methods: brushing, coating, dipping, painting, automated dispensing, automated printing, controlled dispensing. The second component 250 is deposited, preferably via automated printing, wherein the second component is a midsole and/or a shoe upper or parts thereof, preferably both. The deposition of the second component as the shoe upper and/or the midsole is carried out in a one-process-step, preferably via 3D printing. The liquified polymer is subsequently applied onto the second component wherein the liquified polymer is the outsole 290. The preferred deposition step is carried out by an automated process. The liquified component 230 for depositing comprises a dynamic viscosity of 10000 to 50000 mPa·s, preferably of 20000 to 40000 mPa·s.

In particular, and in order to speed up the deposition process, the outer rim of the area of the sporting good which is targeted during the deposition step is dispensed using a thinner nozzle and using a liquified polymer with a higher viscosity to create a more solid rim. Secondly, the area inside of the rim is dispensed in a quicker process using a wider nozzle and a liquified polymer with a lower viscosity. Therefore, the liquified polymer is deposited in a first section of the sporting good with a dynamic viscosity of 30,000 to 50,000 mPa·s; and in a second section of the sporting good with a dynamic viscosity of 10,000 to 30,000 mPa·s. The second section is the area which is positioned in between the first area. The first section is the outer rim of the second section of the sporting good 260.

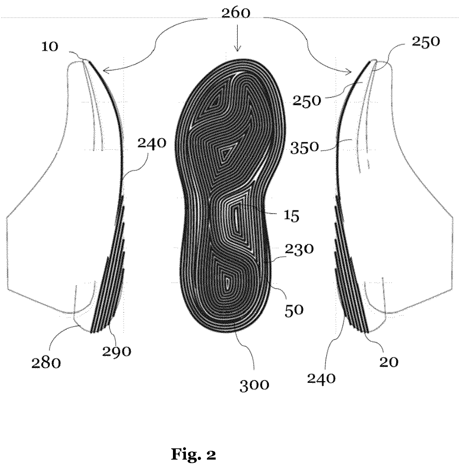

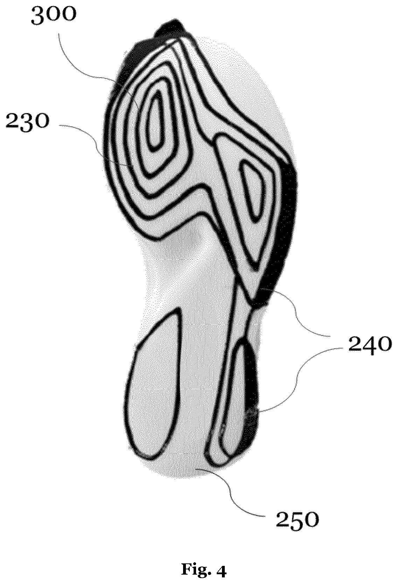

In some embodiments, during deposition, the contact angle θ between the liquified polymer 230 and the second component 250 is 30° to 110°, preferably 40° to 90°, more preferably 50° to 70°. The preferred deposition is an automated deposition process. In some embodiments the liquified polymer comprises granulates. Moreover, it may further comprise pigments and/or fibers. In some embodiments, as depicted for example in Figures 2 and 4, the liquified component 230 is deposited onto the second component 250 in a pattern. The pattern comprises a laminar and/or linear pattern.

After deposition, the liquified polymer 230 may be textured during optional method step 160. The addition of textures to the deposited liquified polymer 230 is performed using texturing devices known in the art, such as a pattern brush and/or a pattern roller. The addition of textures and structures may further be performed by pressing patterns via pattern devices in the deposited semi-dried liquified polymer 230.

In the last method step 170 of the method 100, the liquified polymer is cured. In this way, the liquified polymer 230 which in some embodiments may be deposited on a second component 250 is cured while at the same time the solvent(s) existent in the liquified polymer 230 are removed. The solvent may be removed via condensation and the condensates may be recycled. The curing temperature in the curing step 170 is between 20°C to 150°C, preferably 30°C to 100°C, more preferably 40°C to 50°C is used, and the curing time is between 2 min to 750 min, preferably, 5 min to 390 min, more preferably 10 min to 30 min. In some embodiments the curing step 170 is carried out using radiation. Curing 170 is preferably performed using infrared radiation (IR). However, other types of radiation are applicable. The thickness of the component 240 after the curing step is 0.3 mm- 0.7 mm, preferably 0.5 mm.

In some embodiments, the sporting good 260 obtained in part by the method 100 illustrated in **Fig. 1** is a sports shoe 260. Specifically, the component 240 is a sole, preferably an outsole of the sports shoe. Furthermore, the sports shoe obtained in part by the method 100 is a football shoe. In this context, the component is a stud of the sports shoe. The sports shoe 260 may comprise at least two components, a first and a second component. The first component is an outsole 290 which is produced according to the method 100 illustrated in and described with respect to **Fig. 1****.** The second component is a midsole 350 of the sports shoe 260.

The sporting good 260 depicted in **Fig. 2** is a sports shoe 260. **Fig. 2** illustrates an exemplary outsole of the sports shoe 260 produced by the method according to the present invention in accordance with certain aspects of the present disclosure. For a better understanding of the invention, three different views of the sports shoe 260 are shown, i.e. two lateral views (left and right illustration) and a view from below (middle illustration). In **Fig. 2** it is shown that the component 240 is an outsole 290 of the sporting good 260. The component 240, i.e. the outsole 290 of the shoe is manufactured according to the method 100 described with respect to **Fig. 1****.**

Coming back to **Fig. 2****,** the liquified polymer 230 is deposited following a continuous dispensing path onto the second component 250. In this manner, the outsole 290 comprises a linear arrangement. The liquified polymer 230 is deposited onto a second component 250 which, in **Fig. 2****,** is not directly connected to the shoe upper. It is conceivable that the second component 250, onto which the liquified polymer 230 is deposited, is directly connected to the shoe upper. The pattern as per Fig. 2 is obtained by using a thin nozzle during deposition of the liquified polymer 230, which follows the path indicated by the black line. In this manner, the outsole 290 obtains the pattern 300 as can be seen in Fig. 2, wherein the white areas do not carry any liquified polymer. Accordingly, the second component 250 shines through the outsole 290.

In **Fig. 2****,** the outsole 290 has a different material than the midsole. However, it is conceivable that the midsole and the outsole have the same material and/or shape. In some embodiments, the midsole and the shoe upper are produced by the above-described method. In this manner, the whole sports shoe 260 is produced by the method according to present invention. In some embodiments, an outsole 290 according to aspects of present invention is connected to such a midsole which is produced in a one-step-process together with the shoe upper. In this context, the deposition is carried out using 3D printing.

Coming back to **Fig.2****,** the outsole 290 has a pattern 300. As can be seen in **Fig. 2****,** the component 240 that has been deposited has a linear pattern. The sports shoe 260 can be manufactured by using the above-described method for producing the component 240 according to the present disclosure, which is arranged as such on the midsole 350 of the sports shoe 260. As can be seen in **Fig. 2****,** the outsole 290 is arranged in a toe section 10, mid-foot secti and a heel section 20 of the sports shoe.

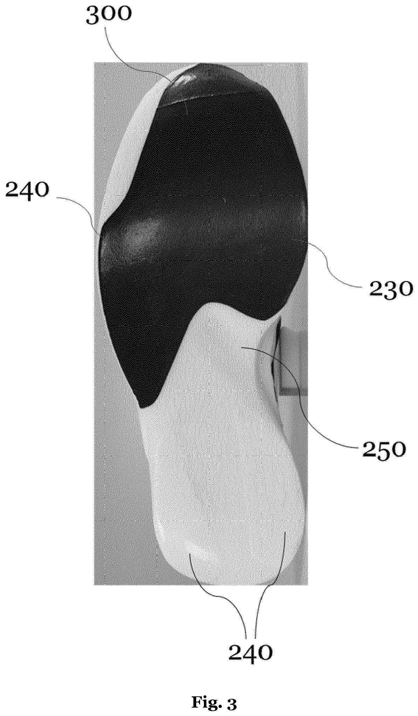

In **Fig. 3** an exemplary embodiment of the outsole is shown. As can be seen in **Fig. 3****,** the outsole 290 has a pattern 300, which is laminar. Furthermore, the outsole 290 provides a glossy and shiny appearance. The outsole 290 in **Fig. 3** has two different colors, i.e. a dark colored in the mid- and fore-foot section, and light colored in the heel section. It is conceivable that the outsole 290 comprises only one color, or more than two colors. Furthermore, and as can be seen in **Fig. 3** the outsole 290 is arranged in three segments, i.e. in one larger laminar segment positioned on the mid- and fore-foot section, and two smaller laminar segments positioned on the heel section.

To obtain this pattern or appearance, the polymer is mixed with the solvent, and the liquified polymer 230 is obtained, which is deposited on the second component 250, i.e. the midsole in a uniform manner.

The liquified component 230 is deposited onto one or more different sections of the sporting good 260, such as toe section, forefoot section, heel section, midsole section, sidewall section and/or the upper section. The liquified polymer is deposited by at least one of the following methods: brushing, coating, dipping, painting, automated dispensing, automated printing, controlled dispensing. The preferred deposition mode is carried out by an automated process. In some embodiments, the second component 250 is a midsole and/or a shoe upper or parts thereof, preferably both, and the second component may be manufactured by a 3D printing process. 3D printing comprises additive manufacturing methods, such as stereolithographic methods and laser sintering. With stereolithographic methods light causes chemical monomers and oligomers to cross-link together to form layer-wise polymers making up the 3D printed object. With laser sintering a laser causes powdered material to sinter due to heat. Aiming the laser at points in space defined by a 3D model, binding the material together creates a solid structure. Another example of an additive manufacturing method is fused deposition modeling is which the part is produced by extruding small beads or streams of material which harden immediately to form layers.

In a subsequent step, the liquified polymer 230 which is used to produce the outsole 290 is applied on the 3D printed midsole and/or shoe upper. If both the midsole and the upper are manufactured using a 3D printing process, the midsole and the upper may be manufactured in separate 3D printing processes and connected afterwards, e.g. by gluing, welding sewing, etc. Alternatively, the midsole and the upper may be manufactured together in a single manufacturing step.

In the embodiment of Fig. 3 the second component is a midsole made from a polymer material and the liquified polymer is applied onto the midsole, thus forming the outsole 290. In this embodiment, the polymer material may be an Ethylene-vinyl acetate (EVA), a thermoplastic urethane (TPU) or a supercritical foam.

In **Fig. 4** the outsole 290 has a pattern 300, which is linear. To obtain this pattern, the liquified polymer 230 is deposited in a continuous dispensing mode. The linear pattern is characterized in that it comprises a consistent width, which is achieved by using a dispenser nozzle resulting in a consistent discharge during the deposition. In this manner, the liquified polymer 230 is dispensed without interruption of the deposition process. Preferably, the liquified polymer 230 comprises unchanged physical properties during the whole deposition process. The outsole 290 is obtained according to the method described with respect to Fig.1. The component 240 has a thickness of 0.3 mm-0.7 mm, preferably 0.5 mm after curing.

Also in the embodiment of Fig. 3 the second component is a midsole made from a polymer material and the liquified polymer is applied onto the midsole, thus forming the outsole 290. In this embodiment, the polymer material may be an Ethylene-vinyl acetate (EVA), a thermoplastic urethane (TPU) or a supercritical foam.

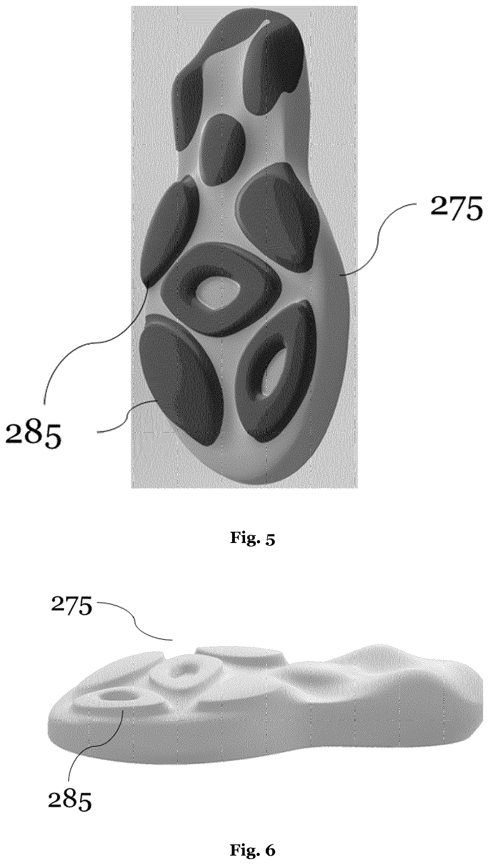

In **Figs. 5 and 6****,** the component 240 which is produced according to the method of the present invention as described above is used as a stud 285 for a sports shoe, which is a football shoe 275. As can be seen in the **Figs. 5 and 6****,** the studs 285 are arranged on the sole of the football shoe 275. In **Fig. 5****,** the studs 285 have a different shape and appearance than the sole of the football shoe 275. In some embodiments, the studs 285 and the sole of the football shoe 275 are produced in several individual steps, e.g. a separate production of the studs and the sole according to aspects of present invention and subsequent deposition of the studs 285 onto the sole.

In this context, the studs 285 is produced using different materials than the sole. In some embodiments, the material of the sole and the studs 285 of the sports shoe 275 is the same, which can be seen in greater detail in **Fig. 6****.** Furthermore, the studs 285 and the sole in **Fig. 6** are manufactured in a one-step-process according to the method of present invention.

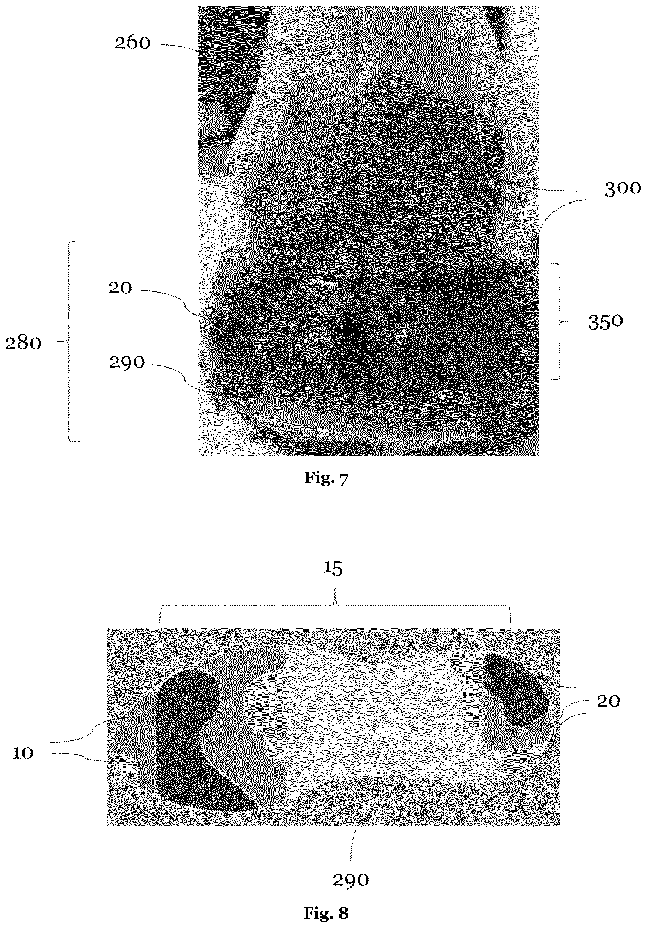

In some embodiments, the component 240 produced according to aspects of present invention is applied in transition zones of the sporting good 260 which can be seen in greater detail in **Fig. 7****.** The component 240 is applied in more than one portion of the sporting good 260. As can be seen in **Fig. 7** the sports shoe 260 comprises an outsole 290 and a midsole 350 wherein the component 240 is arranged on both of the shoe elements, i.e. on the sole 280, i.e. the midsole and the outsole 290 as well as on the shoe upper of the sports shoe 260. For obtaining this pattern, the liquified polymer 230 is additionally deposited onto the midsole 350 and the shoe upper. In **Fig. 7** the midsole 350 and the outsole 290 have the same shape and/or material. However, it is also possible that in some embodiments, the midsole 350 and the outsole 290 comprise a different pattern 300 and/or material. In this context, the liquified polymer 230 is textured after deposition. The addition of textures to the deposited liquified polymer 230 is performed using texturing devices such as a pattern brush and/or a pattern roller. The addition of textures and structures is further performed though pressing pattern via pattern devices in the deposited semi-dried liquified polymer 230. Furthermore, the component 240 is deposited in the transition zone of the outsole 290 and in particular in the heel segment 20 of the outsole 290. Using this approach, the component 240 may be arranged as such to create a pattern 300 on more than one portion of the sporting good 260.

As discussed in the outset of present disclosure, the liquified component can be deposited on predetermined portions of the sporting good 260, using a torsion map, an abrasion map and/or a pressure map, which is illustrated in the **Figs. 8 to 11****.** In this manner, the liquified polymer 230 is applied to the areas where the most abrasion, traction or torsion is measured.

In **Fig. 8****,** the predetermined zones of the sole 280 according to aspects of present invention are measured using an abrasion map. Preferably, the abrasion map is used for determining the zones of an outsole 290 onto which the liquified polymer is applied as described herein. In this manner, the liquified polymer 230 is applied e.g. in sidewalls, toecaps 10 and heel counters 20. The mid-foot areas 15 can be left out with the liquified polymer 230. In some embodiments, however, the liquified polymer 230 is also applied on the mid-foot area 15. Using this approach, the liquified polymer 230 can be applied with different physical properties, such as thickness weight, color, and/or viscosity on the predetermined areas. In this way, each measured area with its special needs can be individually addressed during the deposition of the liquified polymer 230 onto the second component 250 (e.g. a midsole, an upper or the like). This approach can be used for example for enhancing the durability of a sporting good based on the different traction, abrasion and/or pressure that is applied thereon during its use. In some embodiments, the liquified polymer 230 is deposited using a mask. In this way, the liquified polymer 230 is deposited onto the sporting good in a desired zone and/or pattern.

It is to be noted that, the abrasion, traction and/or pressure map varies based on the sporting good, and moreover, based on the sports type (e.g., basketball, football, tennis etc.) wherein the sporting good may be used. For example, the sole, and preferably the outsole of a basketball shoe is enhanced by applying the component 240 in the one or more areas where the most lateral traction is recorded. Likewise, the component 240 is preferably applied in the sidewall areas of the sole of a tennis shoe, in order to support these areas, which show the most traction and/or abrasion.

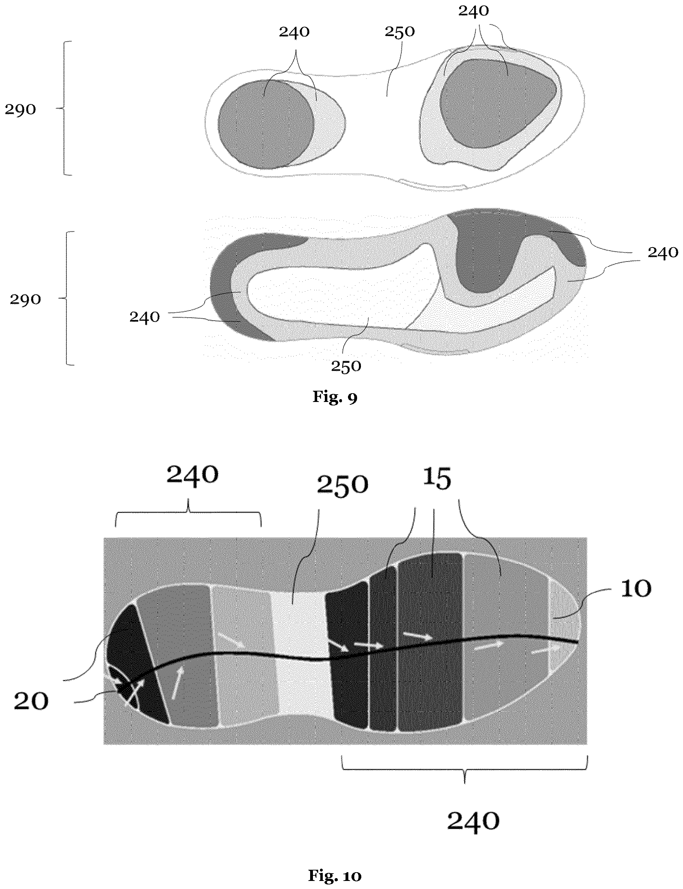

Coming now to **Fig. 9****,** two maps are shown for the outsole 290 according to aspects of present invention comprising predetermined zones. These predetermined zones are determined/measured using a traction map, abrasion map and/or pressure map. In the first map (up), the outsole 290 comprises in particular thicker layers of component 240 in the "mid-foot to fore-foot" heel zone. The thickness of the component 240 arranged at the rim compared to the component 240 arranged at the middle area may vary. Furthermore, the neighboring areas that surround precisely these thicker areas, may also comprise the component 240 in layers with a different thickness. The edging rims of both the "thickest" areas as well as the "neighboring" areas may further vary, i.e. comprise the component 240 with a different thickness. The resting areas may comprise thinner layer or no layers of the component 240.

In the second map (bottom), the outsole 290 comprises in particular thicker layers of the component 240 in the "heel-to-sidewall" zone as well as on the "mid-foot-to-sidewall" zone. Just as in the upper map, the thickness on the rim and the middle area of the deposited component 240 may vary. Furthermore, the neighboring areas that surround these thicker areas, may also comprise the component 240 in layers with a different thickness. The edging rims of both the "thickest" areas as well as the "neighboring" areas may further comprise the component 240 with a different thickness. The resting areas may comprise thinner layer or no layers of the component 240. As a result, the component 240 reduces the overall weight of the outsole and of the sporting good while in the same time enhances the durability of the sporting good.

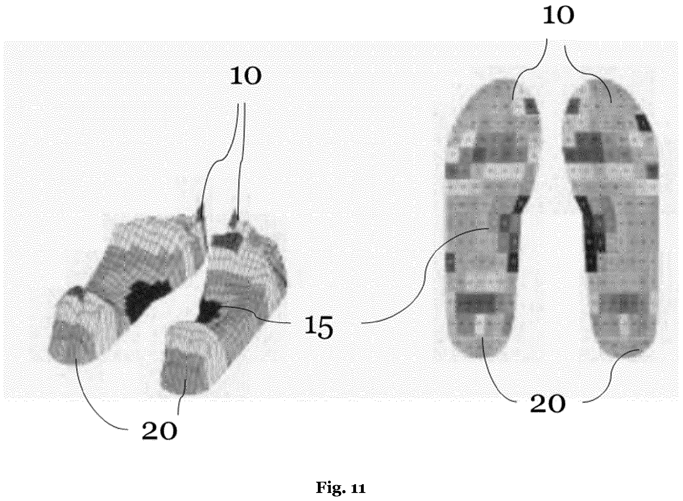

**Fig. 10** shows an exemplary traction map for determining predetermined zones of an outsole 290 according to aspects of present invention. Using this approach, the component 240 and in particular the liquified polymer 230 is applied with different thickness and viscosity onto the second components 250 in different zones, e.g. the toe cap 10, the mid-foot zone 15 and/or the heel zone 20. These predetermined zones may vary from zones that may be measured by another map, for example a pressure map as shown in **Fig. 11****.**

In **Fig. 11** an exemplary pressure map is shown, which can be used for determining predetermined zones of an outsole 290 according to aspects of present invention. As can be seen in **Fig. 11** which is self-explanatory, the heel section 20 shows increased pressure as compared to the mid-foot section 15. This difference can be addressed by applying the component 240 in these "high-pressure" zones, i.e. depositing thicker layers of liquified polymer onto these "high-pressure" areas.

It is noted that the above embodiments and / or examples may be combined with further aspects as described herein and details of the embodiments and / or examples may also be omitted, as will be understood by the skilled person. The scope of protection is determined by the claims and is not limited by the embodiments and / or examples disclosed in the above figures.

The invention is further described by the following embodiments:
1. Method (100) for producing a component (240), preferably for a sporting good (260), comprising the following steps:
   a. providing (110) a polymer (210);
   b. providing (120) a solvent (220);
   c. mixing (130) the polymer (210) with the solvent (220), thereby producing a liquified polymer (230); and
   d. curing (170) the liquified polymer (230), thereby producing the component (240).
2. Method (100) according to the preceding embodiment, wherein the component is a first component of the sporting good and the method further comprises the step of depositing (150) the liquified polymer (230) obtained in the mixing step (130) onto a second component (250) of the sporting good (260), wherein the depositing step (150) precedes the curing step (170).
3. Method (100) according to the preceding embodiment, further comprising the step of texturing (160) the liquified polymer (230) obtained in the mixing step (130), wherein the texturing step (160) precedes the curing step (170).
4. Method (100) according to one of the preceding embodiments, wherein the sporting good (260) is a sports shoe (270).
5. Method (100) according to the preceding embodiment, wherein the component (240) is a sole (280), preferably an outsole (290) of the sports shoe (270).
6. Method (100) according to one of embodiments 4-5, wherein the sports shoe (270) is a football shoe (275).
7. Method (100) according to one of embodiments 4-6, wherein the component (240) is a stud (285) of the sports shoe (270).
8. Method (100) according to one of embodiments 4-7, wherein the liquified component (230) is deposited onto one or more sections of the sports shoe (270), including a toe section, a forefoot section, a heel section, a midsole section, a sidewall section and/or an upper section.
9. Method (100) according to one of embodiments 2-8, wherein the liquified component (230) is deposited onto one or more predetermined portions of the sporting good (260).
10. Method (100) according to the preceding embodiment, wherein one or more predetermined portions of the sporting good (260) is/are determined using a torsion map, an abrasion map and/or a pressure map.
11. Method (100) according to one of embodiments 2-10, wherein the liquified component (230) is deposited onto the second component in a pattern (300).
12. Method (100) according to the preceding embodiment, wherein the pattern (300) comprises a laminar and/or a linear pattern.
13. Method (100) according to one of embodiments 2-12, wherein the first component (240) is deposited onto the second component with a thickness of 1-10 mm, preferably 2 mm-4 mm, most preferably 3 mm.
14. Method (100) according to one of embodiments 2-13, wherein the thickness of the first component (240) after the curing step is 0.3 mm-0.7 mm, preferably 0.5 mm.
15. Method (100) according to one of embodiments 2-14, wherein the depositing step (150) is carried out by at least one of the following methods: brushing, coating, dipping, painting, automated dispensing, automated printing, controlled dispensing.
16. Method (100) according to one of embodiments 2-15, wherein the second component (250) is produced via 3D printing, wherein preferably the second component (250) is a mid-sole and/or a shoe upper and/or parts thereof.
17. Method (100) according to one of embodiments 2-16, wherein the liquified polymer (230) is deposited in a first section of the sporting good (260) with a dynamic viscosity of 30000 to 50000 mPa·s; and in a second section of the sporting good (260) with a dynamic viscosity of 10000 to 30000 mPa·s.
18. Method (100) according to the preceding embodiment, wherein the first section is an outer rim of the second section of the sporting good (260).
19. Method (100) according to one of embodiments 2-18, wherein the contact angle θ between the liquified polymer (230) and the second component (250) is 30° to 110°, preferably 40° to 90°, more preferably 50° to 70°.
20. Method (100) according to one of the preceding embodiments, wherein the curing step (170) is carried out using radiation.
21. Method (100) according to one of the preceding embodiments, wherein the polymer (210) is selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof.
22. Method (100) according to one of the preceding embodiments, wherein the solvent (220) is a mixture (225) selected from the group of solvent-borne and/or water-borne solvents, preferably from the group of solvent-borne solvents, more preferably from the group of (C₁-C₆) ethers, (C₁-C₁₀) esters, (C₁-C₈) ketones, (Ci-Cs) alkanes, and/or combinations thereof.
23. Method (100) according to the preceding embodiment, wherein the solvent (220) is a mixture (225) of one or more of tetrahydrofuran (THF), methyl ethyl ketone (MEK), cyclohexane (CYC), ethyl acetate, butyl acetate, preferably THF and/or CYC.
24. Method (100) according to the preceding embodiment, wherein the ratio of the mixture (225) is in the range of 10 to 90 vol. %., preferably 20 to 80 vol. %, more preferably 30 to 70 vol. %.
25. Method (100) according to the preceding embodiment, wherein the ratio of the mixture (225) is in the range of 10 to 90 wt.%., preferably 20 to 80 wt. %, more preferably 30 to 70 wt. %.
26. Method (100) according to one of the preceding embodiments, wherein the liquified component (230) comprises a dynamic viscosity of 10000 to 50000 mPa·s, preferably of 20000 to 40000 mPa·s.
27. Method (100) according to one of the preceding embodiments, wherein the polymer (210) is characterized by a Shore A value (190) and/or Shore D value (195), wherein the Shore A value (190) is in the range of 20 to 120, preferably, 40 to 100, more preferably, 60 to 80; and the Shore D value (195) is in the range of 2 to 80, preferably 5 to 75, more preferably 8 to 70.
28. Method (100) according to one of the preceding embodiments, wherein the ratio of the polymer (210) to the solvent (220) in the mixing step (130) is in the range of 2:98 to 40:60 vol.%, preferably, 5:95 to 30:70 vol.%, more preferably, 10:90 to 20:80 vol.%.
29. Method (100) according to one of the preceding embodiments, wherein the liquified polymer (230) further comprises pigments and/or fibers.
30. Method (100) according to one of the preceding embodiments, wherein the liquified polymer (230) further comprises granulates.
31. Method (100) according to one of the preceding embodiments, wherein in the curing step (170) a curing temperature of between 20°C to 150°C, preferably 30°C to 100°C, more preferably 40°C to 50°C is used, and the curing time is between 2 min to 750 min, preferably, 5 min to 390 min, more preferably 10 min to 30 min.
32. Method (1000) for manufacturing a sports shoe (270), comprising the method (100) of one of embodiments 2-31, wherein the first component is an outsole (290) of the sports shoe (270) and the second component is a mid-sole (350) of the sports shoe (270).
33. Outsole manufactured according to the method (100) of one of the preceding embodiments.
34. Outsole according to the preceding embodiment, wherein the outsole has a pattern (300).
35. Sports shoe comprising an outsole according to one of embodiments 33-34.
36. Sports shoe according to the preceding embodiment, wherein the outsole (290) is arranged at least in a toe section (10), a mid-foot section (15), and or a heel section (20) of the sports shoe.
37. Sports shoe comprising a first component and a second component, wherein the first component is manufactured according to a method of one of embodiments 2-32, wherein the first component is arranged on an upper of the sports shoe.

## Claims

1. Method (100) for producing a component (240), preferably for a sporting good (260), comprising the following steps:
a. providing (110) a polymer (210);
b. providing (120) a solvent (220);
c. mixing (130) the polymer (210) with the solvent (220), thereby producing a liquified polymer (230); and
d. curing (170) the liquified polymer (230), thereby producing the component (240).

2. Method (100) according to the preceding claim, wherein the component is a first component of the sporting good and the method further comprises the step of depositing (150) the liquified polymer (230) obtained in the mixing step (130) onto a second component (250) of the sporting good (260), wherein the depositing step (150) precedes the curing step (170).

3. Method (100) according to the preceding claim, further comprising the step of texturing (160) the liquified polymer (230) obtained in the mixing step (130), wherein the texturing step (160) precedes the curing step (170).

4. Method (100) according to one of the preceding claims, wherein the sporting good (260) is a sports shoe (270); and wherein preferably the component (240) is a sole (280), preferably an outsole (290) of the sports shoe (270).

5. Method (100) according to claim 4, wherein the sports shoe (270) is a football shoe (275); and wherein preferably the component (240) is a stud (285) of the sports shoe (270).

6. Method (100) according to one of claims 4 or 5, wherein the liquified component (230) is deposited onto one or more sections of the sports shoe (270), including a toe section, a forefoot section, a heel section, a midsole section, a sidewall section and/or an upper section; and wherein preferably the liquified component (230) is deposited onto one or more predetermined portions of the sporting good (260); and wherein preferably one or more predetermined portions of the sporting good (260) is/are determined using a torsion map, an abrasion map and/or a pressure map.

7. Method (100) according to one of claims 2-6, wherein the liquified component (230) is deposited onto the second component in a pattern (300); and wherein preferably the pattern (300) comprises a laminar and/or a linear pattern.

8. Method (100) according to one of claims 2-7, wherein the first component (240) is deposited onto the second component with a thickness of 1-10 mm, preferably 2 mm-4 mm, most preferably 3 mm; and wherein preferably the thickness of the first component (240) after the curing step is 0.3 mm-0.7 mm, preferably 0.5 mm.

9. Method (100) according to one of claims 2-8, wherein the depositing step (150) is carried out by at least one of the following methods: brushing, coating, dipping, painting, automated dispensing, automated printing, controlled dispensing; and wherein the second component (250) is preferably produced via 3D printing, wherein preferably the second component (250) is a mid-sole and/or a shoe upper and/or parts thereof.

10. Method (100) according to one of claims 2-9, wherein the liquified polymer (230) is deposited in a first section of the sporting good (260) with a dynamic viscosity of 30000 to 50000 mPa·s; and in a second section of the sporting good (260) with a dynamic viscosity of 10000 to 30000 mPa·s; and wherein preferably the first section is an outer rim of the second section of the sporting good (260); and wherein preferably the contact angle θ between the liquified polymer (230) and the second component (250) is 30° to 110°, preferably 40° to 90°, more preferably 50° to 70°.

11. Method (100) according to one of the preceding claims, wherein the ratio of the polymer (210) to the solvent (220) in the mixing step (130) is in the range of 2:98 to 40:60 vol.%, preferably, 5:95 to 30:70 vol.%, more preferably, 10:90 to 20:80 vol.%.

12. Method (1000) for manufacturing a sports shoe (270), comprising the method (100) of one of claims 2-11, wherein the first component is an outsole (290) of the sports shoe (270) and the second component is a mid-sole (350) of the sports shoe (270).

13. Outsole manufactured according to the method (100) of one of the preceding claims.

14. Sports shoe comprising an outsole according to claim 13.

15. Sports shoe comprising a first component and a second component, wherein the first component is manufactured according to a method of one of claims 2-12, wherein the first component is arranged on an upper of the sports shoe.
